# EUROPEAN PATENT SPECIFICATION

(11) **EP 3 210 867 B1**
(45) Date of publication and mention of the grant of the patent: **16.09.2020**
(21) Application number: 16156860.5
(22) Date of filing: 23.02.2016
(51) Int. Cl.: B62J 6/028, B62J 6/02, F21S 41/255, F21S 41/265, F21W 102/18

(54) **HEADLAMP FOR A BICYCLE**
SCHEINWERFER FÜR EIN ZWEIRAD
PHARE POUR UNE BICYCLETTE

(43) Date of publication of application: 30.08.2017
(73) Proprietor: Herrmans Bike Components Oy, 68600 Jakobstad (FI)
(72) Inventor: LINDHOLM, Janne, 68600 Pietarsaari (FI)
(74) Representative: Berggren Oy, Helsinki & Oulu

(56) References cited:
- JP-U- 3 156 194
- KR-A- 20150 123 031
- US-A- 5 211 465
- US-A1- 2003 198 060
- US-A1- 2006 215 415
- US-A1- 2012 314 442

## Description

### Technical field

The present invention relates to a bicycle headlamp, comprising a lens, said lens having a focal point space, a light source for emitting light beams, and a reflector for reflecting said light beams towards said lens.

### Background

The purpose of a bicycle headlamp is to light up the road surface in front of the bicycle and at the same time to make the bicycle visible to other traffic. National regulations, such as for example StVZO (Strassenverkehs-Zulassungs-Ordnung) in Germany, may set certain technical requirements for the headlamps to be used in the traffic to ensure that the headlamp does not blind oncoming traffic. These regulations may be related to minimum and maximum illumination in different angles of the lighting direction and to a so-called cut-off line of the light pattern. Bicycle headlamps are typically equipped with a light source and a reflector. The reflected light from the reflector forms a light pattern in front of the bicycle. Light that is not reflected by the reflector is lost in directions where it is not needed. DE 10 2011 116 028 A1 discloses a bicycle headlamp with improved optical efficiency, where an optical lens is guiding light from the light source that is not reflected by the reflector. A problem of this solution is that the lens cannot guide the light very accurately because it has to be so close to the light source.

Documents US 2003/198060 A1 and US 2006/215415 A1 disclose vehicle headlamps.

### Summary

An object of the invention is to provide a bicycle headlamp with high optical efficiency and a very exact guiding of the light.

The object is achieved with a bicycle headlamp defined in the independent claim 1. Some preferred embodiments of the invention are disclosed in the dependent claims.

The invention relates to a bicycle headlamp, comprising a lens, a light source for emitting light beams, and a reflector for reflecting the emitted light beams towards the lens. The lens has a focal point space. The reflector comprises a first reflecting area and the emitted light beams are arranged to reflect from the first reflecting area towards the lens substantially through the focal point space of the lens. A term focal point used in relation to lenses and reflectors strictly speaking means a dimensionless dot or point. In the description a term "focal point space" is used to express that a space through which light beams are arranged to pass is not only a small dimensionless dot but a larger area comprising the actual focal point and a spherical space surrounding the actual focal point. The focal point space may have a diameter of 1-2 millimeters, 0.5-1.0 millimeters or 0.1-0.5 mm.

According to the invention said first reflecting area has a shape, which is substantially a part of an elongated spheroid with a first reflecting focal point space and a second reflecting focal point space and the light source is positioned substantially in the first reflecting focal point space. Here, terms first and second reflecting focal point space are used to indicate the actual focal point and a spherical space surrounding the actual focal point as explained above. Further, the focal point space of the lens and the second reflecting focal point space substantially coincide, i.e. they are located in a substantially same spot. Thus, the focal point spaces need not be exactly in the same point, but a tolerance of few millimeters is allowed.

According to the invention said reflector further comprises a second reflecting area. In this embodiment the light beams are arranged to reflect from said second reflecting area towards said lens through a fictional plane between the lens and the focal point space of the lens. Thus, the light beams cross said fictional plane in front of the focal point space seen from the direction of the light source.

In a preferred embodiment of the headlamp said lens has a lower part and an upper part and substantially all of the light beams reflected by the reflector are directed to pass through the lower part of the lens. Preferably, said lower part of the lens is located mainly below a straight defined by the first and second reflecting focal points of the reflector and said upper part of the lens is located mainly above a straight defined by the first and second reflecting focal points of the reflector. This means that at least a majority of the lower part of the lens is located below said straight and at least a majority of the upper part of the lens is located above said straight. Advantageously, substantially all of the light beams emitted by the light source directly towards the lens are directed to pass through the upper part of the lens.

In yet another preferred embodiment of the headlamp said light source has a main radiation direction, which is substantially perpendicular to the direction of the straight passing through the light source and the focal point space of the lens. In this embodiment a major part of the light beams emitted by the light source is directed towards the reflector, which reflects the light beams towards the lens, and a minor part on the light beams enter the lens directly from the light source.

Another preferred embodiment of the headlamp further comprises a light control member to prevent light beams from entering the lower part of the lens between the focal point space of the lens and the light source. The purpose of the light control member is to produce a sharp cut-off edge for the light pattern. The benefit of the light control members depends on the type of the light source. If the light source produces an optically sharp light cone, the light control member does not bring any significant additional effect. However, if the light source produces an optically unsharp light cone, the light control member helps to achieve a sharp cut-off edge for the light pattern.

Preferably, said light control member comprises a shield plate having an edge and the focal point space of the lens is located adjacent to said edge. Advantageously, said shield plate forms an angle ε with the direction of a straight passing through the light source and the focal point space of the lens, which angle ε is 0 to 90 degrees. In other words, the shield plate may be parallel to the direction of a straight passing through the light source and the focal point space of the lens or said shied plate may be perpendicular to the direction of the straight passing through the light source and the focal point space of the lens or the shield plate may be in any other angle between the aforementioned.

In yet another preferred embodiment of the headlamp said lens has a convex first surface and a substantially flat second surface. Thus, the lens is a so-called plano-convex lens. Thus, the second surface may be flat, slightly convex, slightly concave, or it may have a very low pattern.

In yet another preferred embodiment of the headlamp said lens has a convex first surface and the lower part of the lens has a substantially flat second surface. Further, the thickness of the upper part of the lens is substantially constant. In this embodiment only the lower part of the lens deflects the light beams passing through it. The upper part of the lens does not have a significant effect on the direction of the light beams passing through it.

An advantage of the invention is that a major part of the light emitted by the light source can be directed very exactly and sharply.

A further advantage on the invention is that only a small part of the light emitted by the light source is lost in directions where it is not needed, i.e. the optical efficiency of the lamp is very good.

Various embodiments will become apparent from the detailed description given hereafter. However, it should be understood that the detailed description and specific examples, while indicating preferred embodiments of the invention, are given by way of illustration only, since various changes and modifications will become apparent to those skilled in the art.

### Brief description of the drawings

In the following the invention will be described in detail. In the description, reference is made to the enclosed drawings, in which
Fig. 1 is a cross-sectional view of one exemplary embodiment of a bicycle headlamp according to the invention,
Fig. 2a is a schematic section view of the bicycle headlamp of Fig. 1 showing the propagation of the light beams emitted by the light source,
Fig. 2b is a schematic section view of first variant embodiment of the present invention, and
Fig. 2c is a schematic section view of a second variant embodiment of the present invention.

### Detailed description

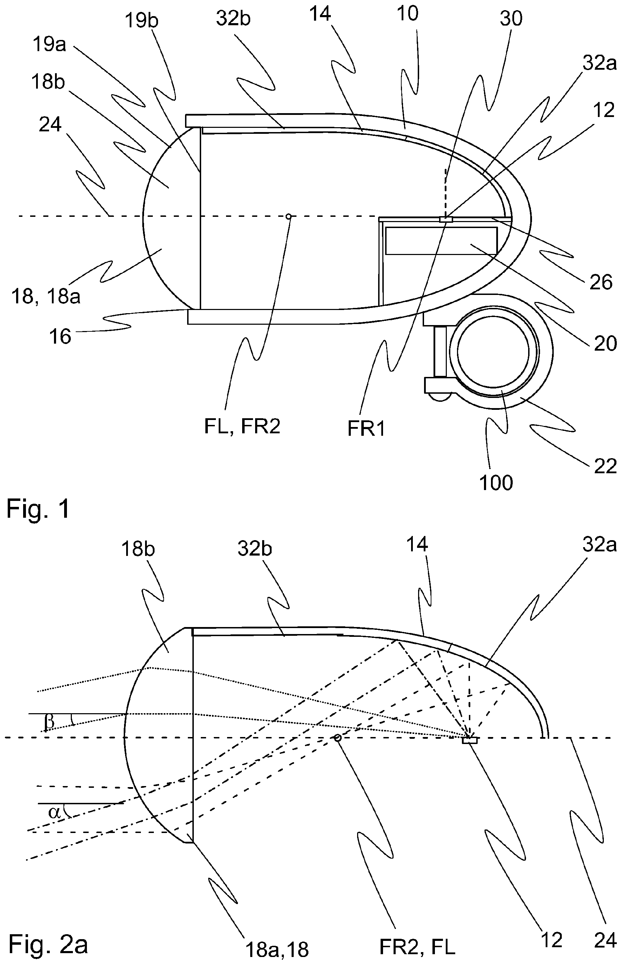

Figure 1 illustrates a headlamp for a bicycle according to the invention in a section view. The headlamp comprises a housing 10 and a light source 12 disposed inside the housing. Preferably the light source is a LED element (Light Emitting Diode). The light source is secured to a carrier plate 26, which lies on the optical axis 24 of the headlamp. The light source has a main radiation direction 30, which is perpendicular to the optical axis of the headlamp. The headlamp further comprises a reflector 14 and a lens 18. The reflector and the lens are optical elements, which direct one or more light beams emitted by the light source 12 out of the housing through the front opening 16 of the housing.

The lens 18 is a so-called plano-convex lens having a convex first surface 19a and a flat second surface 19b. The lens is placed onto the front opening 16 of the housing to cover the opening. An imaginary plane including the optical axis 24 divides the lens to a lower part 18a and to an upper part 18b. The lens can be made of transparent plastic or glass.

The reflector is placed inside the housing to cover at least part of the inner surface of the housing. Preferably, the reflector covers the whole inner surface of the housing above the horizontal plane including the optical axis 24. The reflector can be made of plastic or metal. The reflector has a light reflecting surface or coating, which is divided with a fictional boundary line to a first reflecting area 32a and to a second reflecting area 32b. The reflecting areas have different shapes, but a uniform boundary line. A first reflecting area 32a of the reflecting surface has two reflecting focal point spaces; a first reflecting focal point space FR1 and a second reflecting focal point space FR2. Preferably, the shape of first reflecting area is substantially a part of an elongated spheroid, i.e. an ellipse rotated about its major (longer) axis. The light source is positioned at a first reflecting focal point space FR1 of the first reflecting area 32a. The lens 18 is positioned onto the opening 16 of the housing 10 in such a way that the focal point space FL of the lens and the second reflecting focal point space FR2 of the first reflecting area 32a substantially coincide. The second reflecting area 32b has a form of a paraboloid or a spheroid having a major axis that is longer than in the first reflection area.

The lamp may also comprise a power supply means for supplying electric power to the light source. Preferably, the power supply means comprise a separate dynamo or a battery 20 placed inside or outside the housing. On the outer surface of the housing there is a bracket 22 for securing the lamp to the bicycle. The lamp may be attached for example to the handlebar 100 of a bicycle or to the frame of a bicycle.

Fig. 2a is a schematic partial section view of the bicycle lamp shown in Fig. 1. The light source 12 is emitting light mainly on the reflecting areas 32a, 32b of the reflector 14 and the reflector reflects the light beams towards the lens 18. The reflector is shaped such that all reflected light beams cross the plane including the optical axis 24 so that they pass through the lower part 18a of the lens 18. The first reflecting area collects and reflects the light beams emitted by the light source so that the light beams substantially converge at a second reflecting focal point space FR2, which coincides with the focal point space FL of the lens 18. Thus, the light beams travel through the focal point space FL towards the lens 18. These light beams are here called first reflected light beams and they are depicted with dashed lines in Fig 2a. The first reflected light beams pass through the lower part 18a of the lens and propagate forwards substantially parallel with the optical axis 24 of the lamp. These first reflected light beams form a front part of the light pattern for illuminating the long-distance regions of the ground surface in front of the bicycle. The first reflected light beams, which have travelled through the focal point space FL of the lens 18, are parallel, collimated light beams creating a clear cut-off-line for the front part of the light pattern.

A second reflecting area 32b of the reflector can be designed so that the reflected light beams cross the horizontal plane somewhere between the lens 18 and the focal point space FL of the lens 18. These light beams are here called second reflected light beams and they are depicted with dot-and-dash lines in Fig. 2a. The second reflected light beams also pass through the lower part 18a of the lens, but they deflect downwards from the optical axis 24, i.e. they form an angle α with the direction of the optical axis 24. Therefore, the second reflected light beams are directed to the rear part of the light pattern for illuminating the short-distance regions of the ground surface in front of the bicycle.

A small part of the light beams emitted by the light source 12 does not reflect from the reflector 14, but they propagate directly from the light source to the lens 18 and pass through the upper part 18b of the lens 18. These light beams are here called direct light beams and they are depicted with dotted lines in Fig 2a. The upper part of the lens deflects the light downwards creating an angle β with the direction of the optical axis 24. Consequently, when the bicycle headlamp is in use and attached to the bicycle, the direct light beams reach the ground level behind the cut-off line of the light pattern.

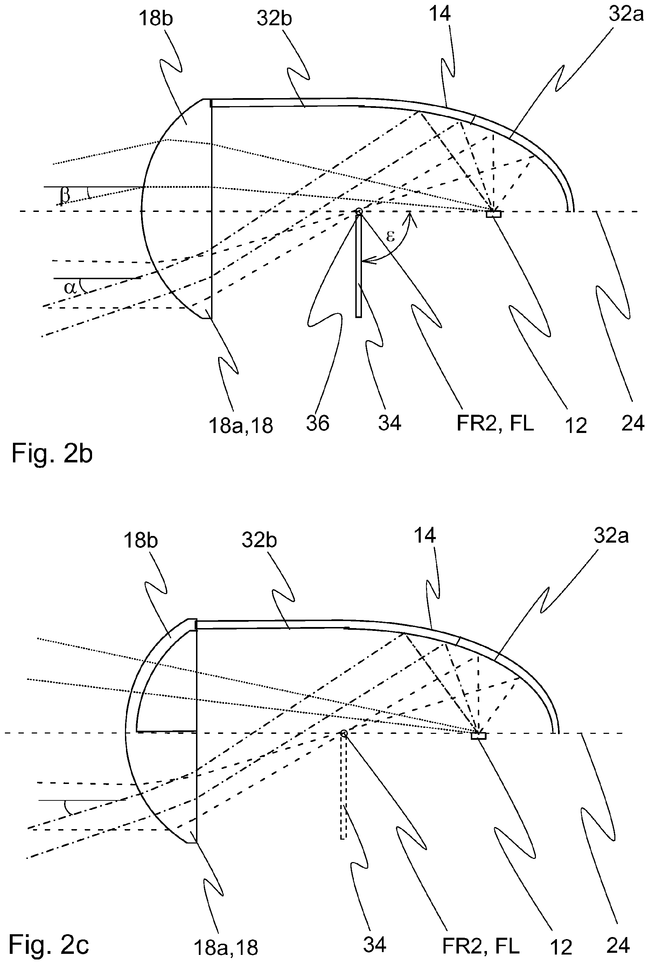

Fig. 2b is a schematic partial section view of a first variant embodiment of the bicycle headlamp according to the invention. The embodiment of Fig. 2b contains all the parts of the bicycle headlamp of Figs. 1 and 2a. Additionally, the embodiment comprises a light control member in form of a shield plate 34, which is placed between the light source 12 and the lens 18. The purpose of the shield plate is to prevent the light beams, either direct or reflected, from traveling to the lower part 18a of the lens 18 through a plane between the focal point space FL of the lens and the light source 12. Preferably, the shield plate is located at the focal plane including focal point space FL in a position, which is perpendicular to the optical axis 24. Alternatively, the shield plate can be parallel to the optical axis or it may form an angle ε with the direction of a straight passing through the light source 12 and the focal point space FL of the lens 18, which angle ε is 0 to 90 degrees. The shield plate has a straight or curved edge 36, which settles near to the focal point space FL of the lens 18. The aim is that the shield plate prevents unwanted light beams from reaching the lower part 18b of the lens 18 to produce a sharp cut-off line to the light distribution pattern. The cut-off line is formed as an inverted image of the light control member. Preferably, the reflector 14, and the reflective areas 32a, 32b are so formed that only a very small amount of the light is shielded away by the light control member.

Fig. 2c is a schematic partial section view of a second variant embodiment of the bicycle headlamp according to the invention. The embodiment of Fig. 2c contains all the parts of the bicycle headlamp of Figs. 1 and 2a. The embodiment of 2c may also comprise the light control member in form of a shield plate 34, which is placed between the light source 12 and the lens 18. The embodiment of 2c differs from the previously presented embodiments in that the upper part 18b of lens 18 has a cutout in a way that the material thickness of the upper part 18b is substantially constant. In this embodiment the light beams emitted by the light source 12 and entering directly from the light source to the lens are not deflected when they pass through the upper part 18b of the lens 18, but they propagate through the lens without changing direction. This means that most of the direct light beams turn upwards from the optical axis 24. Consequently, when the bicycle headlamp is in use and attached to the bicycle, the direct light beams do not reach the ground level but they illuminate the space and objects above the ground level, such as traffic signs. However, since the major part on the light emitted by the light source 12 is directed to the reflecting areas 32a, 32b of the reflector 14 and only a minor part of the light reaches the lens directly, the amount of light directed above the horizontal level is so small that the lamp does not blind oncoming traffic.

Above, some preferred embodiments of the invention are explained. The invention is not limited to the solutions described above, but the inventive idea can be applied in numerous ways within the scope of the claims.

## Claims

1. A bicycle headlamp, comprising a lens (18), said lens (18) having a focal point space (FL), a light source (12) for emitting light beams, and a reflector (14) for reflecting said light beams towards said lens (18), which reflector (14) comprises a first reflecting area (32a) to reflect said light beams from said first reflecting area (32a) towards said lens (18) substantially through said focal point space (FL), **characterized in that** said first reflecting area (32a) has a shape, which is substantially a part of an elongated spheroid with a first reflecting focal point space (FR1) and a second reflecting focal point space (FR2) and wherein the light source (12) is positioned substantially in the first reflecting focal point space (FR1) and the focal point space (FL) of the lens (18) and the second reflecting focal point space (FR2) substantially coincide and that said reflector (14) further comprises a second reflecting area (32b), which first and second reflecting areas have different shapes, and which second reflecting area (32b) has a form of a paraboloid or spheroid having a major axis that is longer than in the first reflecting area (32a), for reflecting said light beams from said second reflecting area (32b) towards said lens (18) through a fictional plane between the lens (18) and the focal point space (FL) of the lens (18).

2. A bicycle headlamp according to claim 1, **characterized in that** said light source (12) has a main radiation direction (30), which is substantially perpendicular to the direction of the straight passing through the light source (12) and the focal point space (FL) of the lens (18).

3. A bicycle headlamp according to claim 1 or 2, **characterized in that** said lens (18) has a lower part (18a) and an upper part (18b), which lower part (18a) of the lens (18) is located mainly below a straight defined by first and second reflecting focal points space (FR1, FR2) of the reflector (14) and which upper part (18b) of the lens (18) is located mainly above a straight defined by the first and second reflecting focal points space (FR1, FR2) of the reflector (14) and substantially all of the light beams reflected by the reflector (14) are directed to pass through the lower part (18a) of the lens (18), and it further comprises a light control member in form of a shied plate (34), which shied plate (34) is placed between the light source (12) and the lens (18) to prevent light beams from entering the lower part (18a) of the lens (18) between the focal point space (FL) of the lens (18) and the light source (12).

4. A bicycle headlamp according to claim 3, **characterized in that** said shield plate (34) has an edge (36) and the focal point space (FL) of the lens (18) is located adjacent to said edge (36).

5. A bicycle headlamp according to claim 4, **characterized in that** said shied plate (34) forms an angle ε with the direction of a straight passing through the light source (12) and the focal point space (FL) of the lens (18), which angle ε is 0 to 90 degrees.

6. A bicycle headlamp according to any of the claims 1-5, **characterized in that** said lens (18) has a convex first surface (19a) and a substantially flat second surface (19b).

7. A bicycle headlamp according to any of the claims 2-5, **characterized in that** said lens (18) has a convex first surface (19a), the lower part (18a) of the lens (18) has a substantially flat second surface (19b) and the thickness of the upper part (18b) of the lens (18) is substantially constant.

## Patentansprüche

1. Fahrradscheinwerfer, umfassend eine einen Brennpunktraum (FL) aufweisende Linse (18), eine Lichtquelle (12) zum Aussenden von Lichtstrahlen und einen Reflektor (14) zum Reflektieren von Lichtstrahlen in Richtung der Linse (18), welcher Reflektor (14) einen ersten Reflexionsbereich (32a) umfasst, um die Lichtstrahlen von dem ersten Reflexionsbereich (32a) zu der Linse (18) im Wesentlichen durch den Brennpunktraum (FL) zu reflektieren, **dadurch gekennzeichnet, dass** der erste reflektierende Bereich (32a) eine Form aufweist, die im Wesentlichen ein Teil eines länglichen Sphäroids mit einem ersten reflektierenden Brennpunktraum (FR1) und einem zweiten reflektierenden Brennpunktraum (FR2) ist, und wobei die Lichtquelle (12) im Wesentlichen in dem ersten reflektierenden Brennpunktraum (FR1) positioniert ist, und der Brennpunktraum (FL) der Linse (18) und der zweite reflektierende Brennpunktraum (FR2) im Wesentlichen zusammenfallen, und dass der Reflektor (14) ferner einen zweiten reflektierenden Bereich (32b) umfasst, wobei erste und zweite reflektierende Bereiche unterschiedliche Formen haben, und welcher zweite Reflexionsbereich (32b) eine Form eines Paraboloids oder Sphäroids mit einer Hauptachse aufweist, die länger ist als im ersten Reflexionsbereich (32a), um die Lichtstrahlen von dem zweiten Reflexionsbereich (32b) zu der Linse (18) durch eine fiktive Ebene zwischen der Linse (18) und dem Brennpunktraum (FL) der Linse (18) zu reflektieren.

2. Fahrradscheinwerfer nach Anspruch 1, **dadurch gekennzeichnet, dass** die Lichtquelle (12) eine Hauptstrahlungsrichtung (30) aufweist, die im Wesentlichen senkrecht zur Richtung der durch die Lichtquelle (12) und den Brennpunktraum (FL) der Linse (18) verlaufenden Geraden verläuft.

3. Fahrradscheinwerfer nach Anspruch 1 oder 2, **dadurch gekennzeichnet, dass** die Linse (18) einen unteren Teil (18a) und einen oberen Teil (18b) aufweist, welcher untere Teil (18a) der Linse (18) sich hauptsächlich unterhalb einer durch den ersten und zweiten reflektierenden Brennpunktraum (FR1, FR2) des Reflektors (14) definierten Geraden befindet, und welcher obere Teil (18b) der Linse (18) sich hauptsächlich über einer durch den ersten und zweiten reflektierenden Brennpunktraum (FR1, FR2) des Reflektors (14) definierten Geraden befindet, und im Wesentlichen alle vom Reflektor (14) reflektierten Lichtstrahlen durch den unteren Teil (18a) der Linse (18) geleitet werden, und ferner umfassend ein Lichtsteuerelement in Form einer Abschirmplatte (34), wobei die Abschirmplatte (34) zwischen der Lichtquelle (12) und der Linse (18) angeordnet ist, um zu verhindern, dass Lichtstrahlen in den unteren Teil (18a) der Linse (18) zwischen dem Brennpunktraum (FL) der Linse (18) und der Lichtquelle (12) eintreten.

4. Fahrradscheinwerfer nach Anspruch 3, **dadurch gekennzeichnet, dass** die Abschirmplatte (34) eine Kante (36) aufweist und der Brennpunktraum (FL) der Linse (18) neben der Kante (36) angeordnet ist.

5. Fahrradscheinwerfer nach Anspruch 4, **dadurch gekennzeichnet, dass** die Abschirmplatte (34) einen Winkel ε mit der Richtung einer durch die Lichtquelle (12) und den Brennpunktraum (FL) der Linse (18) verläufenden Geraden bildet, welcher Winkel ε 0 bis 90 Grad beträgt.

6. Fahrradscheinwerfer nach einem der Ansprüche 1 bis 5, **dadurch gekennzeichnet, dass** die Linse (18) eine konvexe erste Oberfläche (19a) und eine im Wesentlichen flache zweite Oberfläche (19b) aufweist.

7. Fahrradscheinwerfer nach einem der Ansprüche 2 bis 5, **dadurch gekennzeichnet, dass** die Linse (18) eine konvexe erste Oberfläche (19a) aufweist, der untere Teil (18a) der Linse (18) eine im Wesentlichen flache zweite Oberfläche (19b) aufweist, und die Dicke des oberen Teils (18b) der Linse (18) im Wesentlichen konstant ist.

## Revendications

1. Phare de bicyclette, comprenant une lentille (18), ladite lentille (18) ayant un espace de point focal (FL), une source lumineuse (12) pour émettre des faisceaux lumineux, et un réflecteur (14) pour réfléchir lesdits faisceaux lumineux vers ladite lentille (18), lequel réflecteur (14) comprend une première zone réfléchissante (32a) pour réfléchir lesdits faisceaux lumineux depuis ladite première zone réfléchissante (32a) vers ladite lentille (18) sensiblement à travers ledit espace de point focal (FL), **caractérisé en ce que** ladite première zone réfléchissante (32a) a une forme, qui fait sensiblement partie d'un sphéroïde allongé avec un premier espace de point focal réfléchissant (FR1) et un second espace de point focal réfléchissant (FR2) et dans lequel la source lumineuse (12) est positionnée sensiblement dans le premier espace de point focal réfléchissant (FR1) et l'espace de point focal (FL) de la lentille (18) et le second espace de point focal réfléchissant (FR2) coïncident sensiblement et **en ce que** ledit réflecteur (14) comprend en outre une seconde zone réfléchissante (32b), lesquelles première et seconde zones réfléchissantes ont des formes différentes, et laquelle seconde zone réfléchissante (32b) a une forme d'un paraboloïde ou d'un sphéroïde ayant un axe principal qui est plus long que dans la première zone réfléchissante (32a), pour réfléchir lesdits faisceaux lumineux depuis ladite seconde zone réfléchissante (32b) vers ladite lentille (18) à travers un plan fictif entre la lentille (18) et l'espace de point focal (FL) de la lentille (18).

2. Phare de bicyclette selon la revendication 1, **caractérisé en ce que** ladite source lumineuse (12) a une direction de rayonnement principale (30), qui est sensiblement perpendiculaire à la direction de la ligne droite passant à travers la source lumineuse (12) et l'espace de point focal (FL) de la lentille (18).

3. Phare de bicyclette selon la revendication 1 ou 2, **caractérisé en ce que** ladite lentille (18) a une partie inférieure (18a) et une partie supérieure (18b), laquelle partie inférieure (18a) de la lentille (18) est située principalement en dessous d'une ligne droite définie par les premier et second espaces de points focaux réfléchissants (FR1, FR2) du réflecteur (14) et laquelle partie supérieure (18b) de la lentille (18) est située principalement au-dessus d'une ligne droite définie par les premier et second espaces de points focaux réfléchissants (FR1, FR2) du réflecteur (14) et sensiblement tous les faisceaux lumineux réfléchis par le réflecteur (14) sont dirigés pour passer à travers la partie inférieure (18a) de la lentille (18), et elle comprend en outre un élément de commande de lumière sous la forme d'une plaque de protection (34), laquelle plaque de protection (34) est placée entre la source lumineuse (12) et la lentille (18) pour empêcher les faisceaux lumineux d'entrer dans la partie inférieure (18a) de la lentille (18) entre l'espace de point focal (FL) de la lentille (18) et la source lumineuse (12).

4. Phare de bicyclette selon la revendication 3, **caractérisé en ce que** ladite plaque de protection (34) a un bord (36) et l'espace de point focal (FL) de la lentille (18) est situé de manière adjacente audit bord (36).

5. Phare de bicyclette selon la revendication 4, **caractérisé en ce que** ladite plaque de protection (34) forme un angle _{ε} avec la direction d'une ligne droite passant à travers la source lumineuse (12) et l'espace de point focal (FL) de la lentille (18), lequel angle _{ε} est compris entre 0 et 90 degrés.

6. Phare de bicyclette selon l'une quelconque des revendications 1 à 5, **caractérisé en ce que** ladite lentille (18) a une première surface convexe (19a) et une seconde surface sensiblement plate (19b).

7. Phare de bicyclette selon l'une quelconque des revendications 2 à 5, **caractérisé en ce que** ladite lentille (18) a une première surface convexe (19a), la partie inférieure (18a) de la lentille (18) a une seconde surface sensiblement plate (19b) et l'épaisseur de la partie supérieure (18b) de la lentille (18) est sensiblement constante.
